# EUROPEAN PATENT SPECIFICATION

(11) **EP 3 076 707 B1**
(45) Date of publication and mention of the grant of the patent: **28.03.2018**
(21) Application number: 14865186.2
(22) Date of filing: 23.06.2014
(51) Int. Cl.: H04W 28/20, H04W 72/04, H04L 5/00, H04W 16/10

(54) **METHOD AND DEVICE FOR ALLOCATING ASYMMETRICAL BANDWIDTH, ENB AND COMPUTER STORAGE MEDIUM**
VERFAHREN UND VORRICHTUNG ZUR ZUWEISUNG ASYMMETRISCHER BANDBREITEN, ENB UND COMPUTERSPEICHERMEDIUM
PROCÉDÉ ET DISPOSITIF D'ATTRIBUTION DE LARGEUR DE BANDE ASYMÉTRIQUE, NOEUD B ÉVOLUÉ (ENB) ET SUPPORT D'INFORMATION INFORMATIQUE

(30) Priority: 28.11.2013 CN 201310627183
(43) Date of publication of application: 05.10.2016
(73) Proprietor: ZTE Corporation, Shenzhen, Guangdong 518057 (CN)
(72) Inventor: ZHANG, Qinghong, Shenzhen Guangdong 518057 (CN); LUO, Yan, Shenzhen Guangdong 518057 (CN); HU, Chenggang, Shenzhen Guangdong 518057 (CN)
(74) Representative: Lavoix
(86) International application number: PCT/CN2014/080554
(87) International publication number: WO 2015/078177

(56) References cited:
- EP-A1- 2 482 603
- WO-A1-2013/042944
- CN-A- 102 064 902
- CN-A- 102 438 320
- CN-A- 103 001 754
- US-A1- 2012 140 802

## Description

### TECHNICAL FIELD

The present disclosure relates to bandwidth allocation in a communication system, and in particular to a method and device for asymmetric bandwidth allocation, an evolved Node B (eNB), and a non-transitory computer-readable storage medium.

### BACKGROUND

With development of wireless broadband communication technology, there is an increasingly notable shortage of wireless spectrum resources. Available wireless spectrum resources are valued more than ever.

In a wireless communication system, even with a flexible bandwidth of a Time Division Duplex (TDD) system, development of a TDD terminal product chain still falls behind due to inadequate investment by mainstream equipment manufacturers. Therefore, bandwidth flexibility of the TDD system fails to relieve wireless spectrum resource shortage as expected.

However, a Frequency Division Duplex (FDD) communication system, as most widely used in a Long Time Evolution (LTE) system and a future 4G wireless communication system, is based on symmetric uplink and downlink bandwidths. However, general network applications concern more downloads than uploads. That is, a downlink bandwidth wider than the uplink bandwidth is required. Document US2012/0140802 discloses a method for allocating uplink resources wherein a portion of a virtual uplink band corresponds to the actual uplink band available. Therefore, adopting same amount of spectrum resources for uplink as for downlink may lead to resource waste.

### SUMMARY

In view of this, embodiments herein provide a method and device for asymmetric bandwidth allocation, an eNB, and a non-transitory computer-readable storage medium.

The features of the method and device according to the present disclosure are defined in the independent claims, and embodiments of the present invention are defined in the dependent claims.

With the method and device for asymmetric bandwidth allocation, the eNB, and the non-transitory computer-readable storage medium according to embodiments herein, a virtual UL bandwidth range is determined, and uplink physical resources are configured according to a difference between an actual UL bandwidth range and the virtual UL bandwidth range. In this way, uplink and downlink bandwidths may be allocated flexibly without changing an FDD protocol framework, greatly increasing utilization of spectrum resources in a wireless communication system.

### BRIEF DESCRIPTION OF THE DRAWINGS

Fig.1 is a flowchart of a method for asymmetric bandwidth allocation according to an embodiment herein.
Fig.2 is a diagram of a structure of a device for asymmetric bandwidth allocation according to an embodiment herein.
Fig.3 is a diagram of a structure of an eNB for asymmetric bandwidth allocation according to an embodiment herein.
Fig.4 is a diagram of a virtual bandwidth and an actual bandwidth for a continuous UL spectrum according to an Embodiment 1 herein.
Fig.5 is a flowchart of allocating asymmetric uplink and downlink bandwidths according to an embodiment herein.
Fig.6 is a diagram of a virtual bandwidth and an actual bandwidth for a discontinuous UL spectrum according to an Embodiment 2 herein.
Fig.7 is a flowchart of a method for asymmetric bandwidth allocation, in response to both the virtual UL bandwidth range and the actual UL bandwidth range being directly specified, according to an Embodiment 3 herein.

### DETAILED DESCRIPTION

According to embodiments herein, an eNB determines a virtual UL bandwidth range, and configures uplink physical resources according to a difference between an actual UL bandwidth range and the virtual UL bandwidth range.

The present disclosure is further elaborated below with reference to drawings and embodiments.

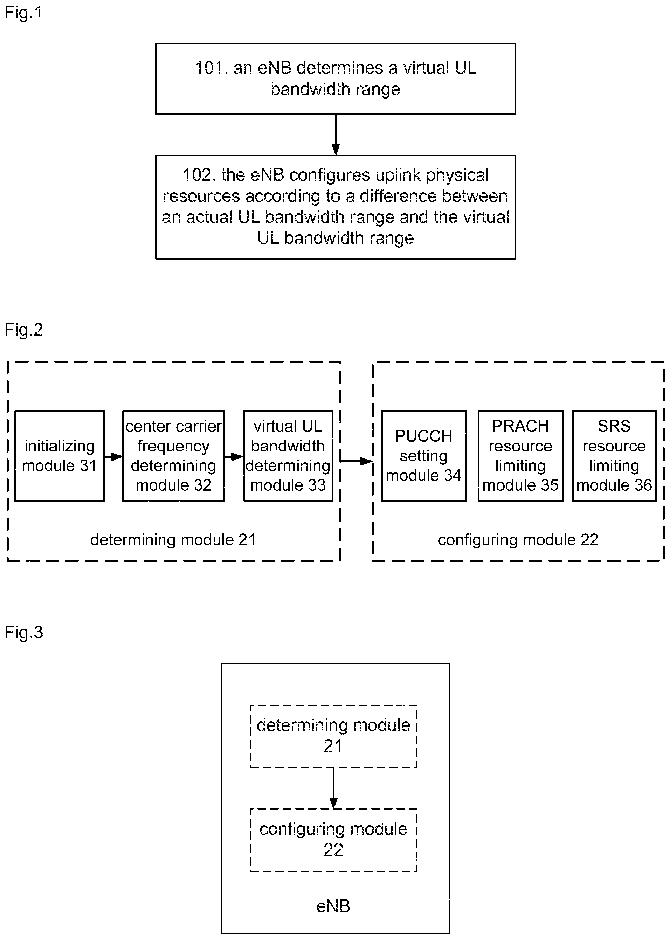

As shown in Fig.1, a method for asymmetric bandwidth allocation according to an embodiment herein includes steps as follows.

In step 101, an eNB determines a virtual UL bandwidth range.

The virtual UL bandwidth range may be determined according to a specified actual UL bandwidth as well as a starting point and an ending point of an actual UL frequency band.

The eNB may determine a UL bandwidth center carrier frequency according to the starting point and the ending point of the actual UL frequency band as well as the specified actual UL bandwidth.

The eNB may then determine the virtual UL bandwidth range according to a specified DownLink, DL, bandwidth and the UL bandwidth center carrier frequency.

The UL bandwidth center carrier frequency may be the frequency at the midpoint of the frequency band.

The virtual UL bandwidth range may be bounded by an upper limit of the UL bandwidth center carrier frequency plus half of the DL bandwidth, and by a lower limit of the UL bandwidth center carrier frequency minus half of the DL bandwidth (i.e., center carrier frequency - DL bandwidth /2 ~ center carrier frequency + DL bandwidth /2).

Alternatively, when both the virtual UL bandwidth range and the actual UL bandwidth range are specified directly, the flow may go to step 102 directly.

In step 102, the eNB configures uplink physical resources according to a difference between an actual UL bandwidth range and the virtual UL bandwidth range.

A Physical Uplink Control Channel, PUCCH, a Physical Random Access Channel, PRACH, and a Sound Reference Signal, SRS, may be configured according to the difference between the virtual UL bandwidth range and the actual UL bandwidth range.

The PUCCH may be configured as follows. A spectrum resource falling within the virtual UL bandwidth range but beyond the actual UL bandwidth range may be included in (as part of) system PUCCH resources. All RB indices corresponding to such spectrum resources may be allocated to virtual User Equipment, UE, to ensure that no real user will use such resources.

The PRACH and the SRS may be configured as follows. RBs occupied by the SRS and by the PRACH may be limited to the actual UL bandwidth range.

With the method, in FDD, a UL bandwidth may be allowed to be different from a DL bandwidth, implementing asymmetric uplink and downlink bandwidth allocation.

To implement such a method, an embodiment herein further provides a device for asymmetric bandwidth allocation as shown in Fig.2. The device may be implemented by a Building Baseband Unit, BBU, board of the eNB. The device includes a determining module 21 and a configuring module 22.

The determining module 21 is configured for: determining a virtual UpLink, UL, bandwidth range.

The configuring module 22 is configured for: configuring uplink physical resources according to a difference between an actual UL bandwidth range and the virtual UL bandwidth range.

The uplink physical resources may include at least one of a PUCCH, a PRACH, and an SRS.

The determining module 21 may be configured for: receiving a directly specified virtual UL bandwidth range, or determining the virtual UL bandwidth range according to a specified actual UL bandwidth as well as a starting point and an ending point of an actual UL frequency band. Corresponding to the specified actual UL bandwidth, the starting point and the ending point of the actual UL frequency band, as well as a specified DownLink, DL, bandwidth, the determining module 31 may further include an initializing module 31, a center carrier frequency determining module 32, and a virtual UL bandwidth determining module 33.

The initializing module 31 may be configured for: initializing the DL bandwidth, the actual UL bandwidth, and the starting point and the ending point of the actual UL frequency band.

The center carrier frequency determining module 32 may be configured for: determining a UL bandwidth center carrier frequency according to the starting point and the ending point of the actual UL frequency band.

The virtual UL bandwidth determining module 33 may be configured for: determining the virtual UL bandwidth range according to the DL bandwidth and the UL bandwidth center carrier frequency.

For example, the initializing module 31 may initialize the DL bandwidth to be 10MHz, the actual UL bandwidth to be 6MHz, and the starting point and the ending point of the UL frequency band to be 2000MHz and 2006MHz, respectively. Therefore, the UL center carrier frequency determining module 32 may determine the center carrier frequency of the UL bandwidth as 2003MHz; the virtual UL bandwidth determining module may determine the virtual UL bandwidth of a range of 1998MHz~2008MHz.

The configuring module 22 may further include a PUCCH setting module 34, a PRACH resource limiting module 35, and an SRS resource limiting module 36.

The PUCCH setting module 34 may be configured for: including, in system PUCCH resources, a spectrum resource falling within the virtual UL bandwidth range but beyond the actual UL bandwidth range; and allocating each resource block, RB, index corresponding to the spectrum resource to virtual User Equipment, UE, to ensure that no real user will use such a resource.

The PRACH resource limiting module 35 may be configured for: limiting a resource allocated to a PRACH, such that an RB occupied by the PRACH falls within the actual UL bandwidth range.

The SRS resource limiting module 36 may be configured for: limiting a resource allocated to an SRS, such that an RB occupied by the SRS falls within the actual UL bandwidth range.

In the aforementioned example, the virtual UL bandwidth may be of the range of 1998MHz∼2008MHz, and the actual UL bandwidth may be of the range of 2000MHz∼2006MHz. The difference between them may be spectrum resources of 1998MHz∼2000MHz and 2006MHz∼2008MHz. The PUCCH setting module 34 may set the aforementioned spectrum resources falling within the virtual bandwidth range but beyond the actual bandwidth range as part of the system PUCCH resources, and allocate all RB indices corresponding to such spectrum resources to the virtual UE to ensure that no real user will use the resources. The PRACH resource limiting module 35 and the SRS resource limiting module 36 may limit RBs occupied by the SRS and the PRACH to the actual UL bandwidth range of 2000MHz∼2006MHz, such that flexible asymmetric bandwidth allocation of a UL bandwidth of 6MHz and a DL bandwidth of 10MH is achieved.

In an aforementioned device, the initializing module 31 may be implemented by a main control panel in the BBU board.

Both the center carrier frequency determining module 32 and the virtual UL bandwidth determining module 33 may be implemented by a baseband panel in the BBU board.

The configuring module 22 may be implemented by the baseband panel in the BBU board.

The present disclosure further provides an eNB. As shown in Fig.3, the eNB may include an aforementioned device for asymmetric bandwidth allocation. That is, the eNB may include the determining module 21 and the configuring module 22 in the device.

The principle and implementation of the method herein will be elaborated below with reference to embodiments.

### Embodiment 1

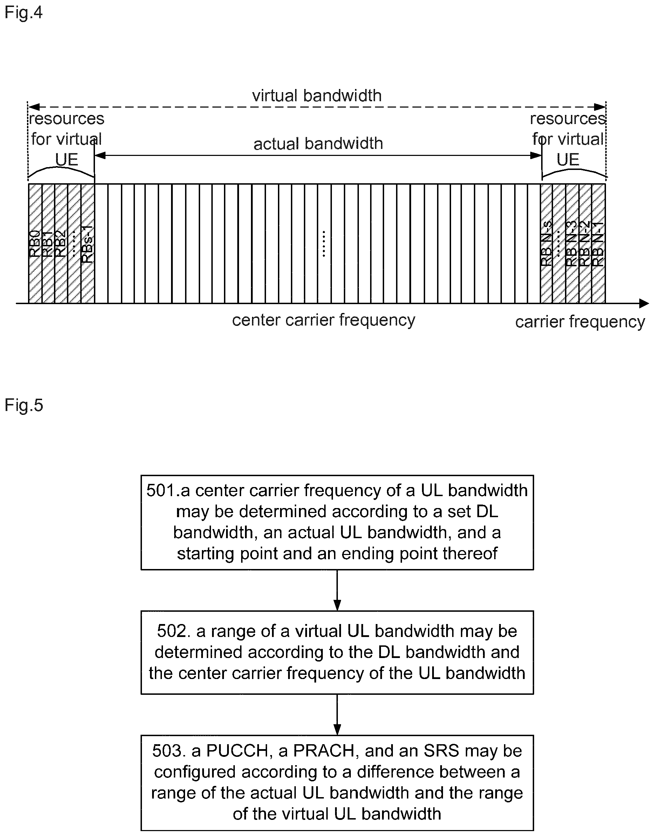

Fig.4 is a diagram of a virtual bandwidth and an actual bandwidth for a continuous UL spectrum according to an Embodiment 1 herein.

For a continuous UL spectrum as shown in Fig.4, asymmetric uplink and downlink bandwidth allocation according to an embodiment herein may be implemented, as shown in Fig.5, as follows.

In step 501, a center carrier frequency of a UL bandwidth may be determined according to a set DL bandwidth, an actual UL bandwidth, and a starting point and an ending point thereof.

The DL bandwidth may be set as BW. The actual UL bandwidth may be set as bw. The starting point of the actual UL frequency band may be set as X2ul. Then, the actual UL bandwidth may be of a range of X2ul∼X2ul+bw.

The actual UL bandwidth bw and the starting point of the actual UL frequency band X2ul may be set, as needed, and to meet: 0<bw=<BW, in unit of Hz.

The center carrier frequency of the UL bandwidth may be set to be ULfc.

Then, ULfc=X2ul+bw/2.

In step 502, a range of a virtual UL bandwidth may be determined according to the DL bandwidth and the center carrier frequency of the UL bandwidth.

Step 501 may give that the UL bandwidth center carrier frequency is ULfc and that the DL bandwidth is BW. Then, the virtual UL bandwidth range may be: ULfc-BW/2~ULfc+BW/2, corresponding to RB indices of 0∼N-1. The N may depend on a system bandwidth value in an LTE protocol. For example, bandwidths 20M, 15M, 10M, 5M, and 1.4M may correspond respectively to N values of 100, 75, 50, 25, and 6.

In step 503, a PUCCH, a PRACH, and an SRS may be configured according to a difference between a range of the actual UL bandwidth and the range of the virtual UL bandwidth.

The actual UL bandwidth range may be ULfc-bw/2∼ULfc+bw/2, corresponding to RB indices of s∼N-s-1.

Step 502 produces the virtual UL bandwidth range of ULfc-BW/2∼ULfc+BW/2, corresponding to RB indices of 0∼N-1.

As shown in Fig.4, there are 2s more RBs corresponding to the virtual UL bandwidth range than those corresponding to the actual UL bandwidth range. The s may be an integer meeting floor((N-1) /2)>=s>=0. The floor(*) represents rounding to the maximal integer no greater than *. For example, virtual bandwidths 5M, 10M, and 20M may correspond respectively to N values 25, 50, and 100, corresponding respectively to maximal s values of 12, 24, and 49.

The PUCHH, the PRACH, and the SRS may be configured according to the difference between the actual UL bandwidth range and the virtual UL bandwidth range.

The PUCCH may be configured as follows. The spectrum resources falling within the virtual UL bandwidth range but beyond the actual UL bandwidth range may be set as part of the system PUCCH resources. All RB indices corresponding to such spectrum resources may be allocated to the virtual UE to ensure that no real user will use such resources.

That is, the s high-frequency RBs and the s low-frequency RBs falling within the virtual UL bandwidth range may be set as part of the system PUCCH resources. In addition, all of the 2s RB indices may be allocated to the virtual UE to ensure that no real UE of the system will use the resources. As shown in Fig.4, the hatched portion may be virtual bandwidth resources allocated to the virtual UE, including s high-frequency RBs of RB N-1∼RB N-s and s low-frequency RBs of RB 0R∼B s-1, and the remaining black part may be the actual bandwidth.

The SRS and the PRACH may be configured as follows. Any RB occupied by the SRS or the PRACH may be limited to the actual UL bandwidth range. That is, an RB occupied by the SRS or the PRACH is limited to one falling within the range of ULfc-bw/2∼ULfc+bw/2.

### Embodiment 2

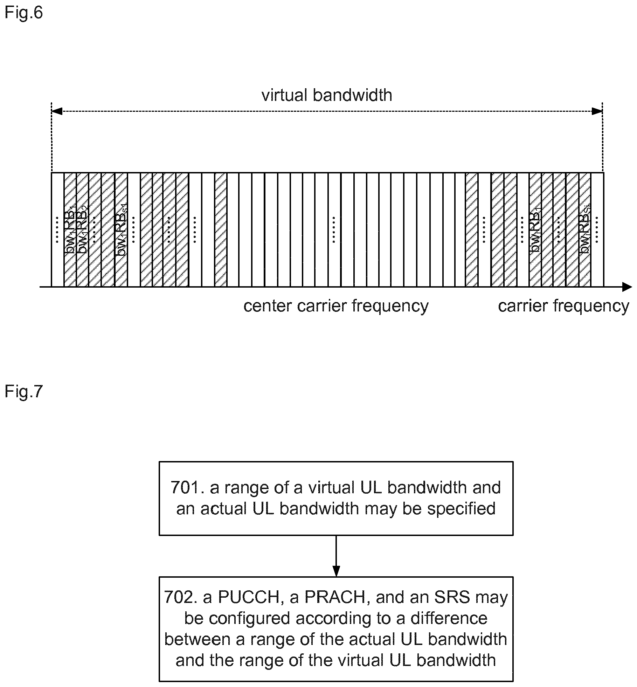

Fig.6 is a diagram of a virtual bandwidth and an actual bandwidth for a discontinuous UL spectrum according to an Embodiment 2 herein.

For a discontinuous UL spectrum as shown in Fig.6, asymmetric uplink and downlink bandwidth allocation according to Embodiment 2 herein may be implemented with the same steps as in Embodiment 1, as shown in Fig.5, as follows.

In step 501, a center carrier frequency of a UL bandwidth may be determined according to a set DL bandwidth, an actual UL bandwidth, and a starting point and an ending point thereof.

The DL bandwidth may be set as BW. The actual UL bandwidth may be set as bw=bw₁,bw₂,...,bwᵢ. The starting point of the actual UL frequency band may be set as X2ul₁, X2ul₂, ..., X2ulᵢ. The bw and the X2ul₁, X2ul₂, ..., X2ulᵢ may be set as needed, and to meet: 0<bw=<BW, X2ul₁<=X2ul₁+bw₁<=X2ul₂<=X2ul₂+bw₂<=...<=X2ulᵢ<=X2ulᵢ+bwᵢ, in unit of Hz.

The center carrier frequency of the UL bandwidth may be set to be ULfc.

Then, ULfc=(X2ul₁+X2ulᵢ+bwᵢ)/2.

In step 502, a range of a virtual UL bandwidth may be determined according to the DL bandwidth and the center carrier frequency of the UL bandwidth.

Step 501 may give that the UL bandwidth center carrier frequency is ULfc and that the DL bandwidth is BW. Then, the virtual UL bandwidth range may be: ULfc-BW/2∼ULfc+BW/2, corresponding to RB indices of 0∼N-1. Same as in Embodiment 1, the N may depend on a system bandwidth value in an LTE protocol. For example, bandwidths 20M, 15M, 10M, 5M, and 1.4M may correspond respectively to N values of 100, 75, 50, 25, and 6.

In step 503, a PUCCH, a PRACH, and an SRS may be configured according to a difference between a range of the actual UL bandwidth and the range of the virtual UL bandwidth.

The actual UL bandwidth range may be X2ul₁∼X2ul₁+bw₁, X2ul₂∼X2ul₂+bw₂, ..., X2ulᵢ∼X2ulᵢ+b_{Wi}, corresponding respectively to RB indices bw₁RB₁∼bw₁RBₛ₁, bW₂RB₁∼bW₂RBₛ₂, ..., bwᵢRB₁∼bwᵢRBₛᵢ, corresponding respectively to numbers of RBs of s1, s2, ...,si, with s1+s2+...+si<=N.

Step 502 produces the virtual UL bandwidth range of ULfc-BW/2∼ULfc+BW/2.

The PUCHH, the PRACH, and the SRS may be configured according to the difference between the actual UL bandwidth range and the virtual UL bandwidth range.

The PUCCH may be configured as follows. The spectrum resources falling within the virtual UL bandwidth range but beyond the actual UL bandwidth range may be set as part of the system PUCCH resources. All RB indices corresponding to such spectrum resources may be allocated to the virtual UE to ensure that no real user will use such resources.

That is, all RBs falling within the virtual UL bandwidth range except for bw₁RB₁∼bw₁RBₛ₁, bw₂RB₁∼bw₂RBₛ₂, ..., bwᵢRB₁∼bwᵢRBₛᵢ may be set as part of the system PUCCH resources. In addition, all of the N-(s1+s2+...+si) RB indices may be allocated to the virtual UE to ensure that no real UE of the system will use the resources. As shown in Fig.6, the hatched portion may be virtual bandwidth resources allocated to the virtual UE, including s1~si RBs corresponding to RB indices bw₁RB₁∼bw₁RBₛ₁, bw₂RB₁∼bw₂RBₛ₂, ..., bwᵢRB₁∼bwᵢRBₛᵢ, and the blank part may be the actual UL bandwidth.

The SRS and the PRACH may be configured as follows. Any RB occupied by the SRS or the PRACH may be limited to the actual UL bandwidth range. That is, an RB occupied by the SRS or the PRACH is limited to one falling within the range of X2ul₁∼X2ul₁+bw₁, X2ul₂∼X2ul₂+bw₂, ..., X2ulᵢ∼X2ulᵢ+bwᵢ.

### Embodiment 3

Fig.7 is a flowchart of a method for asymmetric bandwidth allocation, in response to both the virtual UL bandwidth range and the actual UL bandwidth range being directly specified, according to an Embodiment 3 herein, which may include steps as follows.

In step 701, a range of a virtual UL bandwidth and an actual UL bandwidth may be specified.

For example, the specified virtual UL bandwidth range may be 2000MHz∼2010MHz, and the specified actual UL bandwidth range may be 2002MHz~2008MHz.

In step 702, a PUCCH, a PRACH, and an SRS may be configured according to a difference between a range of the actual UL bandwidth and the range of the virtual UL bandwidth.

The PUCCH may be configured as follows. The spectrum resources falling within the virtual UL bandwidth range but beyond the actual UL bandwidth range may be set as part of the system PUCCH resources. All RB indices corresponding to such spectrum resources may be allocated to the virtual UE to ensure that no real user will use such resources.

The SRS and the PRACH may be configured as follows. Any RB occupied by the SRS or the PRACH has to be limited to the actual UL bandwidth range.

In the aforementioned example, the virtual UL bandwidth may be of the range of 2000MHz∼2010MHz, and the actual UL bandwidth may be of the range of 2002MHz∼2008MHz. The difference between them may be 2000MHz∼2002MHz and 2008MHz∼2010MHz. Therefore, the spectrum resources corresponding to the difference may be included in the system PUCCH resources. In addition, all RB indices corresponding to such spectrum resources may be allocated to the virtual UE to ensure that no real user will use the resources. An RB occupied by the SRS or the PRACH may not exceed the actual UL bandwidth range of 2002MHz∼2008MHz.

When implemented in form of a software functional module and sold or used as an independent product, the method according to an embodiment herein may also be stored in a non-transitory computer-readable storage medium. Based on such an understanding, those skilled in the art will know that an embodiment herein may provide a method, device, or computer program product. Therefore, an embodiment herein may take on a form of hardware, software, or a combination thereof. In addition, an embodiment herein may take on a form of a computer program product implemented on one or more computer available storage media containing computer available program codes. Such computer available storage media may include, but be not limited to, a U disk, a mobile hard disk, a Read-Only Memory (ROM), a magnetic disk memory, a DC-ROM, an optic memory, and the like.

These computer-program instructions may also be stored in a non-transitory computer-readable memory capable of guiding a computer or another programmable data processing device to work in a given way, such that the instructions stored in the computer-readable memory generate a manufactured good including an instruction device for implementing a function specified in one or more flows of the method flowcharts and/or one or more blocks in the block diagrams herein.

An embodiment herein further provides a non-transitory computer-readable storage medium, storing therein a computer program for executing the method for asymmetric bandwidth allocation according to an embodiment herein.

What described are merely embodiments herein, and are not intended to limit the scope of the present disclosure. Any modification, equivalent replacement, improvement, and the like made within the spirit and principle of the present disclosure should be included in the scope of the present disclosure.

### Industrial Applicability

The method and device for asymmetric bandwidth allocation according to the embodiments herein may change, within the framework of existing FDD protocol, existing symmetric uplink and downlink bandwidths, achieving flexible allocation of uplink and downlink bandwidths, greatly increasing utilization of limited spectrum resources in a wireless communication system.

## Claims

1. A method for asymmetric bandwidth allocation, comprising the following steps determining, by an evolved Node B, eNB, a virtual UpLink, UL, bandwidth range (101); and configuring uplink physical resources according to a difference between an actual UL bandwidth range and the virtual UL bandwidth range (102, 503),
wherein the determining, by an evolved Node B, eNB, a virtual UpLink, UL, bandwidth range comprises: acquiring a directly specified virtual UL bandwidth range (701),
or determining, by the eNB, the virtual UL bandwidth range according to a specified actual UL bandwidth (701) as well as a starting point and an ending point of an actual UL frequency band, by: determining a UL bandwidth center carrier frequency according to the starting point and the ending point of the actual UL frequency band as well as the specified actual UL bandwidth (501); and then determining the virtual UL bandwidth range according to a specified DownLink, DL, bandwidth and the UL bandwidth center carrier frequency (502), wherein the virtual UL bandwidth range is bounded by an upper limit of the UL bandwidth center carrier frequency plus half of the DL bandwidth, and by a lower limit of the UL bandwidth center carrier frequency minus half of the DL bandwidth,
wherein the configuring uplink physical resources comprises: configuring, by the eNB, a Physical Uplink Control Channel, PUCCH, a Physical Random Access Channel, PRACH, and a Sound Reference Signal, SRS (503), **characterized in that** the configuring the PUCCH comprises: including in system PUCCH resources, a spectrum resource falling within the virtual UL bandwidth range but beyond the actual UL bandwidth range; and allocating each resource block, RB, index corresponding to the spectrum resource to virtual User Equipment, UE.

2. The method according to claim 1, wherein the configuring the PRACH and the SRS comprises: limiting both an RB occupied by the SRS and an RB occupied by the PRACH to the actual UL bandwidth range.

3. A device for asymmetric bandwidth allocation, comprising a determining module (21) and a configuring module (22), wherein
the determining module (21) is configured for: determining a virtual UpLink, UL, bandwidth range;
the configuring module (22) is configured for: configuring uplink physical resources according to a difference between an actual UL bandwidth range and the virtual UL bandwidth range,
wherein the determining module (21) is configured for: acquiring a directly specified virtual UL bandwidth range,
or determining the virtual UL bandwidth range according to a specified actual UL bandwidth as well as a starting point and an ending point of an actual UL frequency band, by: determining a UL bandwidth center carrier frequency according to the starting point and the ending point of the actual UL frequency band as well as the specified actual UL bandwidth; and then determining the virtual UL bandwidth range according to a specified DownLink, DL, bandwidth and the UL bandwidth center carrier frequency, wherein the virtual UL bandwidth range is bounded by an upper limit of the UL bandwidth center carrier frequency plus half of the DL bandwidth, and by a lower limit of the UL bandwidth center carrier frequency minus half of the DL bandwidth,
wherein the configuring module (22) is configured for: configuring a Physical Uplink Control Channel, PUCCH, a Physical Random Access Channel, PRACH, and a Sound Reference Signal, SRS, **characterized in that** the configuring module (22) is configured for: including in system PUCCH resources, a spectrum resource falling within the virtual UL bandwidth range but beyond the actual UL bandwidth range; and allocating each resource block, RB, index corresponding to the spectrum resource to virtual User Equipment, UE.

4. The device according to claim 3, wherein the configuring module (22) is configured for:
limiting a resource allocated to a PRACH, such that an RB occupied by the PRACH falls within the actual UL bandwidth range; and limiting a resource allocated to an SRS, such that an RB occupied by the SRS falls within the actual UL bandwidth range.

5. An evolved Node B, eNB, comprising the device according to any one of claims 3 to 4.

6. A computer-readable storage medium, storing therein a computer program for executing the method according to any one of claims 1 to 2.

## Patentansprüche

1. Verfahren zur asymmetrischen Bandbreitenzuweisung, folgende Schritte umfassend:
Bestimmen eines virtuellen Bandbreitenbereichs eines Uplinks, UL, (101) und Konfigurieren physischer Uplink-Ressourcen gemäß einer Differenz zwischen einem tatsächlichen UL-Bandbreitenbereich und dem virtuellen UL-Bandbreitenbereich (102, 503) durch einen eNB (evolved Node B),
wobei das Bestimmen des virtuellen Bandbreitenbereichs eines Uplinks, UL, durch einen eNB (evolved Node B) umfasst: Erfassen eines direkt spezifizierten virtuellen UL-Bandbreitenbereichs (701),
oder Bestimmen des virtuellen UL-Bandbreitenbereichs gemäß einer spezifizierten tatsächlichen Bandbreite (701) sowie eines Anfangspunktes und eines Endpunktes eines tatsächlichen UL-Frequenzbandes durch den eNB durch: Bestimmen einer UL-Bandbreiten-Trägermittelfrequenz gemäß dem Anfangspunkt und dem Endpunkt des tatsächlichen UL-Frequenzbandes sowie der spezifizierten tatsächlichen UL-Bandbreite (501) und dann Bestimmen des virtuellen UL-Bandbreitenbereichs gemäß einer spezifizierten Bandbreite eines Downlinks, DL, und der UL-Bandbreiten-Trägermittelfrequenz (502), wobei der virtuelle UL-Bandbreitenbereich durch eine Obergrenze aus der UL-Bandbreiten-Trägermittelfrequenz plus der Hälfte der DL-Bandbreite und durch eine Untergrenze aus der UL-Bandbreiten-Trägermittelfrequenz minus der Hälfte der DL-Bandbreite beschränkt ist,
wobei das Konfigurieren physischer Uplink-Ressourcen umfasst: Konfigurieren eines physischen Uplink-Steuerkanals (PUCCH - Physical Uplink Control Channel), eines physischen Kanals mit wahlfreiem Zugriff (PRACH - Physical Random Access Channel) und eines Klangreferenzsignals (SRS - Sound Reference Signal) durch den eNB (503),
**dadurch gekennzeichnet, dass** das Konfigurieren des PUCCH umfasst: Einschließen einer Spektrumressource, die im virtuellen UL-Bandbreitenbereich, aber außerhalb des tatsächlichen UL-Bandbreitenbereichs liegt, in System-PUCCH-Ressourcen und Zuweisen eines Index jedes Ressourcenblocks, RB, welcher der Spektrumressource entspricht, zur virtuellen Benutzerausrüstung, UE.

2. Verfahren nach Anspruch 1, wobei das Konfigurieren des PRACH und des SRS umfasst: Begrenzen von sowohl eines RB, der von dem SRS belegt ist, und eines RB, der durch den PRACH belegt ist, auf den tatsächlichen UL-Bandbreitenbereich.

3. Vorrichtung zur asymmetrischen Bandbreitenzuweisung, Folgendes umfassend:
ein Bestimmungsmodul (21) und ein Konfigurationsmodul (22), wobei:
das Bestimmungsmodul (21) für Folgendes konfiguriert ist: Bestimmen eines virtuellen Bandbreitenbereichs eines Uplinks, UL,
das Konfigurationsmodul (22) für Folgendes konfiguriert ist: Konfigurieren physischer Uplink-Ressourcen gemäß einer Differenz zwischen einem tatsächlichen UL-Bandbreitenbereich und dem virtuellen UL-Bandbreitenbereich,
wobei das Bestimmungsmodul (21) für Folgendes konfiguriert ist: Erfassen eines direkt spezifizierten virtuellen UL-Bandbreitenbereichs,
oder zum Bestimmen des virtuellen UL-Bandbreitenbereichs gemäß einer spezifizierten tatsächlichen Bandbreite sowie eines Anfangspunktes und eines Endpunktes eines tatsächlichen UL-Frequenzbandes durch: Bestimmen einer UL-Bandbreiten-Trägermittelfrequenz gemäß dem Anfangspunkt und dem Endpunkt des tatsächlichen UL-Frequenzbandes sowie der spezifizierten tatsächlichen UL-Bandbreite und dann Bestimmen des virtuellen UL-Bandbreitenbereichs gemäß einer spezifizierten Bandbreite eines Downlinks, DL, und der UL-Bandbreiten-Trägermittelfrequenz, wobei der virtuelle UL-Bandbreitenbereich durch eine Obergrenze aus der UL-Bandbreiten-Trägermittelfrequenz plus der Hälfte der DL-Bandbreite und durch eine Untergrenze aus der UL-Bandbreiten-Trägermittelfrequenz minus der Hälfte der DL-Bandbreite beschränkt ist,
wobei das Konfigurationsmodul (22) für Folgendes konfiguriert ist: Konfigurieren eines physischen Uplink-Steuerkanals (PUCCH - Physical Uplink Control Channel), eines physischen Kanals mit wahlfreiem Zugriff (PRACH - Physical Random Access Channel) und eines Klangreferenzsignals (SRS - Sound Reference Signal),
**dadurch gekennzeichnet, dass** das Konfigurationsmodul (22) für Folgendes konfiguriert ist: Einschließen einer Spektrumressource, die im virtuellen UL-Bandbreitenbereich, aber außerhalb des tatsächlichen UL-Bandbreitenbereichs liegt, in System-PUCCH-Ressourcen und Zuweisen eines Index jedes Ressourcenblocks, RB, welcher der Spektrumressource entspricht, zur virtuellen Benutzerausrüstung, UE.

4. Vorrichtung nach Anspruch 3, wobei das Konfigurationsmodul (22) für Folgendes konfiguriert ist:
Begrenzen einer Ressource, die einem PRACH zugewiesen ist, derart, dass ein RB, der von dem PRACH belegt ist, im tatsächlichen UL-Bandbreitenbereich liegt, und Begrenzen einer Ressource, die einem SRS zugewiesen ist, derart, dass ein RB, der von dem SRS belegt ist, im tatsächlichen UL-Bandbreitenbereich liegt.

5. eNB (evolved Node B), umfassend die Vorrichtung nach einem der Ansprüche 3 bis 4.

6. Computerlesbares Speichermedium, in dem ein Computerprogramm zum Ausführen des Verfahrens nach einem der Ansprüche 1 bis 2 gespeichert ist.

## Revendications

1. Procédé d'attribution de largeur de bande asymétrique, comprenant les étapes ci-dessous consistant à :
déterminer, par le biais d'une station « Node B » évoluée, eNB, une plage de largeur de bande de liaison montante, UL, virtuelle (101) ; et configurer des ressources physiques de liaison montante selon une différence entre une plage de largeur de bande de liaison UL effective et la plage de largeur de bande de liaison UL virtuelle (102, 503) ;
dans lequel l'étape de détermination, par le biais d'une station « Node B » évoluée, eNB, d'une plage de largeur de bande de liaison montante, UL, virtuelle comprend l'étape consistant à : acquérir une plage de largeur de bande de liaison UL virtuelle spécifiée directement (701) ; ou
déterminer, par le biais de la station eNB, la plage de largeur de bande de liaison UL virtuelle selon une largeur de bande de liaison UL effective spécifiée (701) ainsi qu'un point de début et un point de fin d'une bande de fréquence de liaison UL effective : en déterminant une fréquence porteuse centrale de largeur de bande de liaison UL selon le point de début et le point de fin de la bande de fréquence de liaison UL effective ainsi que la largeur de bande de liaison UL effective spécifiée (501) ; et en déterminant ensuite la plage de largeur de bande de liaison UL virtuelle selon une largeur de bande de liaison descendante, DL, spécifiée et la fréquence porteuse centrale de largeur de bande de liaison UL (502), dans lequel la plage de largeur de bande de liaison UL virtuelle est limitée par une limite supérieure de la fréquence porteuse centrale de largeur de bande de liaison UL plus la moitié de la largeur de bande de liaison DL, et par une limite inférieure de la fréquence porteuse centrale de largeur de bande de liaison UL moins la moitié de la largeur de bande de liaison DL ;
dans lequel l'étape de configuration de ressources physiques de liaison montante comprend l'étape consistant à : configurer, par le biais de la station eNB, un canal de commande de liaison descendante physique, PUCCH, un canal d'accès aléatoire physique, PRACH, et un signal de référence de sondage, SRS (503) ;
**caractérisé en ce que** l'étape de configuration du canal PUCCH comprend les étapes consistant à : inclure, dans des ressources de canal PUCCH de système, une ressource de spectre tombant dans la plage de largeur de bande de liaison UL virtuelle, mais au-delà de la plage de largeur de bande de liaison UL effective ; et attribuer chaque index de bloc de ressources, RB, correspondant à la ressource de spectre, à un équipement d'utilisateur, UE, virtuel.

2. Procédé selon la revendication 1, dans lequel l'étape de configuration du canal PRACH et du signal SRS comprend l'étape consistant à : limiter à la fois un bloc RB occupé par le signal SRS et un bloc RB occupé par le canal PRACH, à la plage de largeur de bande de liaison UL effective.

3. Dispositif pour une attribution de largeur de bande asymétrique, comprenant un module de détermination (21) et un module de configuration (22), dans lequel :
le module de détermination (21) est configuré de manière à : déterminer une plage de largeur de bande de liaison montante, UL, virtuelle ;
le module de configuration (22) est configuré de manière à : configurer des ressources physiques de liaison montante selon une différence entre une plage de largeur de bande de liaison UL effective et la plage de largeur de bande de liaison UL virtuelle ;
dans lequel le module de détermination (21) est configuré de manière à : acquérir une plage de largeur de bande de liaison UL virtuelle spécifiée directement ; ou
déterminer la plage de largeur de bande de liaison UL virtuelle selon une largeur de bande de liaison UL effective spécifiée ainsi qu'un point de début et un point de fin d'une bande de fréquence de liaison UL effective : en déterminant une fréquence porteuse centrale de largeur de bande de liaison UL selon le point de début et le point de fin de la bande de fréquence de liaison UL effective ainsi que la largeur de bande de liaison UL effective spécifiée ; et en déterminant ensuite la plage de largeur de bande de liaison UL virtuelle selon une largeur de bande de liaison descendante, DL, spécifiée et la fréquence porteuse centrale de largeur de bande de liaison UL, dans lequel la plage de largeur de bande de liaison UL virtuelle est limitée par une limite supérieure de la fréquence porteuse centrale de largeur de bande de liaison UL plus la moitié de la largeur de bande de liaison DL, et par une limite inférieure de la fréquence porteuse centrale de largeur de bande de liaison UL moins la moitié de la largeur de bande de liaison DL ;
dans lequel le module de configuration (22) est configuré de manière à : configurer un canal de commande de liaison descendante physique, PUCCH, un canal d'accès aléatoire physique, PRACH, et un signal de référence de sondage, SRS ;
**caractérisé en ce que** le module de configuration (22) est configuré de manière à : inclure, dans des ressources de canal PUCCH de système, une ressource de spectre tombant dans la plage de largeur de bande de liaison UL virtuelle, mais au-delà de la plage de largeur de bande de liaison UL effective ; et attribuer chaque index de bloc de ressources, RB, correspondant à la ressource de spectre, à un équipement d'utilisateur, UE, virtuel.

4. Dispositif selon la revendication 3, dans lequel le module de configuration (22) est configuré de manière à :
limiter une ressource attribuée à un canal PRACH, de sorte qu'un bloc RB occupé par le canal PRACH tombe dans la plage de largeur de bande de liaison UL effective ; et limiter une ressource attribuée à un signal SRS, de sorte qu'un bloc RB occupé par le signal SRS tombe dans la plage de largeur de bande de liaison UL effective.

5. Station « Node B » évoluée, eNB, comprenant le dispositif selon l'une quelconque des revendications 3 à 4.

6. Support de stockage lisible par ordinateur, dans lequel est stocké un programme informatique pour exécuter le procédé selon l'une quelconque des revendications 1 à 2.
